# EUROPEAN PATENT APPLICATION

(11) **EP 4 752 034 A1**
(43) Date of publication of application: **03.06.2026**
(21) Application number: 25217727.4
(22) Date of filing: 21.11.2025
(51) Int. Cl.: B62D 1/18

(54) **ELECTRICALLY ADJUSTABLE STEERING COLUMN FOR VEHICLE, AND VEHICLE**

(30) Priority: 27.11.2024 CN 202411710929
(71) Applicant: thyssenkrupp Presta AG, 9492 Eschen (LI); thyssenkrupp AG, 45143 Essen (DE)
(72) Inventor: Liu, Chao, 88069 Tettnang (DE); Bayer, Tim, 9450 Lüchingen (CH); Geiselberger, Thomas, 9014 St. Gallen (CH)
(74) Representative: thyssenkrupp Intellectual Property GmbH

(57) **Abstract**

The present invention relates to an electrically adjustable steering column for a vehicle, and to a vehicle. The electrically adjustable steering column comprises a rocker arm, a shield sleeve and a steering shaft. The rocker arm comprises a rocker arm inner surface which defines a rocker arm inner hole. The shield sleeve is configured to be slidably received in the rocker arm inner hole, and comprises a shield sleeve outer surface. The steering shaft is rotatably received in the shield sleeve and projects from one end of the shield sleeve. The rocker arm inner surface comprises a rocker arm sliding surface, the shield sleeve outer surface comprises a shield sleeve sliding surface, the rocker arm sliding surface is in sliding contact with the shield sleeve sliding surface, and at least one of the rocker arm sliding surface and the shield sleeve sliding surface comprises a recess. In the technical solution of the present invention, degradation in the performance of the electrically adjustable steering column can be prevented or delayed without adding other components, thus extending the service life of the electrically adjustable steering column.

## Description

### Technical field

The present invention relates to the technical field of vehicle steering systems. In particular, the present invention relates to an electrically adjustable steering column for a vehicle, and to a vehicle.

### Background art

This section provides background information related to the present application, but this information does not necessarily constitute prior art.

The steering column in a vehicle is typically adjustable, e.g. an electrically adjustable steering column (EVL), to allow the position of the steering wheel mounted on the steering column to be adapted to the needs of different drivers. The steering column typically comprises a rocker arm, a shield sleeve and a steering shaft. The rocker arm is mounted on the vehicle body in such a way as to be pivotable at one end, the shield sleeve is slidably received in the rocker arm, and the steering shaft is rotatably received in the shield sleeve. One end of the steering shaft projects from the shield sleeve, and is used for mounting the steering wheel of the vehicle.

In steering columns in the related art, taking into account manufacturing cost and product performance, the rocker arm and the shield sleeve are generally made of metal materials. For example, the rocker arm is generally made of a cast aluminium alloy, and the shield sleeve is generally made of a drawn steel tube. When the shield sleeve slides in the rocker arm relative to the rocker arm, the shield sleeve is generally preloaded so that the outer surface of the shield sleeve tightly abuts the inner surface of the rocker arm; a considerable amount of friction will occur between the inner surface of the rocker arm and the outer surface of the shield sleeve, and consequently, the inner surface of the rocker arm and the outer surface of the shield sleeve will experience a considerable amount of wear. In addition, wear particles generated by wear of the outer surface of the shield sleeve and the inner surface of the rocker arm will accumulate between the outer surface of the shield sleeve and the inner surface of the rocker arm, and these wear particles will further accelerate wear of the outer surface of the shield sleeve and the inner surface of the rocker arm. Wear between the outer surface of the shield sleeve and the inner surface of the rocker arm will cause a decrease in the performance (e.g. rigidity, natural frequency, acoustic performance, adjustment speed, etc.) of the steering column, thereby shortening the service life of the steering column.

To increase the service life of the steering column and maintain the performance of the steering column, in the related art, one or more lubricating grease pockets are generally provided between the rocker arm and the shield sleeve, to meet the requirement of the steering column for a lubricating substance, and thereby reduce wear. However, this requires additional components, and this solution is also unable to solve the technical problem that wear between the outer surface of the shield sleeve and the inner surface of the rocker arm will be accelerated by wear particles that might be present therebetween.

Furthermore, although it is an adequate lubrication solution for manually adjustable steering columns to provide such lubricating grease pockets, they are unable to provide sufficient lubrication for electrically adjustable steering columns, because movement between the rocker arm and the shield sleeve is much greater in an electrically adjustable steering column than in a manually adjustable steering column.

### Summary of the invention

An objective of the present invention is to solve one or more of the technical problems mentioned above.

In particular, an objective of the present invention is to provide an electrically adjustable steering column for a vehicle, the electrically adjustable steering column being able to effectively reduce wear between a shield sleeve outer surface and a rocker arm inner surface, in particular to effectively reduce the risk that wear between the shield sleeve outer surface and the rocker arm inner surface will be accelerated by wear particles generated by wear of the shield sleeve outer surface and the rocker arm inner surface.

According to an aspect of the present invention, an electrically adjustable steering column for a vehicle is provided. The electrically adjustable steering column comprises: a rocker arm comprising a rocker arm inner surface which defines a rocker arm inner hole; a shield sleeve configured to be slidably received in the rocker arm inner hole, the shield sleeve comprising a shield sleeve outer surface; and a steering shaft rotatably received in the shield sleeve and projecting from one end of the shield sleeve; wherein the rocker arm inner surface comprises a rocker arm sliding surface, the shield sleeve outer surface comprises a shield sleeve sliding surface, the rocker arm sliding surface is in sliding contact with the shield sleeve sliding surface, and at least one of the rocker arm sliding surface and the shield sleeve sliding surface comprises a recess.

In the technical solution of the present invention, a recess is provided in at least one of the rocker arm sliding surface located on the rocker arm inner surface and the shield sleeve sliding surface located on the shield sleeve outer surface. Firstly, the recess may be configured to store a lubricating substance; as the shield sleeve slides relative to the rocker arm in an axial direction parallel to a longitudinal central axis, the lubricating substance stored in the recess can be distributed between the shield sleeve sliding surface and the rocker arm sliding surface, to reduce wear therebetween. Secondly, the recess may also be configured to receive wear particles generated by wear between the shield sleeve sliding surface and the rocker arm sliding surface as the shield sleeve slides relative to the rocker arm in the axial direction parallel to the longitudinal central axis, to prevent these wear particles from accumulating on the shield sleeve sliding surface and the rocker arm sliding surface and accelerating wear between the shield sleeve sliding surface and the rocker arm sliding surface. Thus, in the technical solution of the present invention, wear between the rocker arm sliding surface and the shield sleeve sliding surface can be reduced by modifying the surface profile of the rocker arm sliding surface located on the rocker arm inner surface and/or the shield sleeve sliding surface located on the shield sleeve outer surface, without any need to add other components (such as lubricating grease pockets); in particular, wear particles that might be present can be prevented from accumulating on the shield sleeve sliding surface and the rocker arm sliding surface and accelerating wear between the shield sleeve sliding surface and the rocker arm sliding surface. Thus, in the technical solution of the present invention, degradation in the performance of the electrically adjustable steering column can be prevented or delayed without adding other components, thus extending the service life of the electrically adjustable steering column.

Optionally, the rocker arm inner surface comprises a first inner surface, a second inner surface and a first connecting surface, the first inner surface protruding radially inwards relative to the second inner surface, the first connecting surface connecting the first inner surface and the second inner surface, and at least a portion of the first inner surface forming the rocker arm sliding surface; and/or the shield sleeve outer surface comprises a first outer surface, a second outer surface and a second connecting surface, the first outer surface protruding radially outwards relative to the second outer surface, the second connecting surface connecting the first outer surface and the second outer surface, and at least a portion of the first outer surface forming the shield sleeve sliding surface. Only the first inner surface of the rocker arm inner surface is in sliding contact with the shield sleeve outer surface, while the second inner surface of the rocker arm inner surface is spaced apart from the shield sleeve outer surface; or only the first outer surface of the shield sleeve outer surface is in sliding contact with the rocker arm inner surface, while the second outer surface of the shield sleeve outer surface is spaced apart from the rocker arm inner surface; thus, the area of sliding contact can be reduced, thus reducing wear.

Optionally, there are multiple said recesses, spaced apart in an axial direction parallel to a longitudinal central axis of the rocker arm inner hole. The multiple recesses may at least cover the rocker arm sliding surface in the axial direction.

Optionally, the multiple recesses are evenly spaced apart. The multiple recesses that are evenly spaced apart can deliver the lubricating substance stored in the recesses to the shield sleeve sliding surface and the rocker arm sliding surface evenly, to prevent excessive local wear to the shield sleeve sliding surface and the rocker arm sliding surface.

Optionally, the rocker arm inner surface comprises multiple said first inner surfaces, which protrude radially inwards by the same distance relative to the second inner surface; and/or the shield sleeve outer surface comprises multiple said first outer surfaces, which protrude radially outwards by the same distance relative to the second outer surface. The multiple first inner surfaces or multiple first outer surfaces can increase the stability of the shield sleeve when sliding in the rocker arm inner hole of the rocker arm. In addition, having the multiple first inner surfaces protrude radially inwards by the same distance relative to the second inner surface, or having the multiple first outer surfaces protrude radially outwards by the same distance relative to the second outer surface, can make it easier for the shield sleeve to be inserted in the rocker arm inner hole in a centred way.

Optionally, the rocker arm inner surface comprises two said first inner surfaces located in an upper half of the rocker arm inner surface. Having the first inner surface arranged in the upper half makes it easier for the lubricating substance stored in the recesses to act on the rocker arm sliding surface and the shield sleeve sliding surface under the action of gravity, so as to lubricate these two sliding surfaces. Optionally, the shield sleeve outer surface comprises two said first outer surfaces located in an upper half of the shield sleeve outer surface.

Optionally, the two first inner surfaces are symmetric with respect to a vertical plane that includes a longitudinal central axis of the rocker arm inner hole; and/or the two first outer surfaces are symmetric with respect to a vertical plane that includes a longitudinal central axis of the rocker arm inner hole. This can prevent eccentricity of the shield sleeve in the rocker arm inner hole.

Optionally, the first connecting surface and/or the second connecting surface is an inclined transitional surface.

Optionally, the recesses are provided in two or more regions of the first inner surface, each of the regions extending in the axial direction parallel to the longitudinal central axis of the rocker arm inner hole, and the regions being separated from each other.

According to another aspect of the present invention, a vehicle is also provided. The vehicle comprises any one of the electrically adjustable steering columns described above. As a result of having the electrically adjustable steering column described above, the vehicle can also achieve the technical effects described above in relation to the electrically adjustable steering column.

### Brief description of the drawings

The following detailed description with reference to the drawings will clarify the abovementioned and other features and characteristics of the present application; the drawings are merely exemplary, and not necessarily drawn to scale. Identical reference numerals are used to indicate identical components in the drawings, in which:
Fig. 1 is a three-dimensional schematic drawing of an electrically adjustable steering column for a vehicle according to an exemplary embodiment of the present invention;
Fig. 2 is a schematic drawing of a section of the electrically adjustable steering column shown in Fig. 1, taken along a vertical plane that includes a longitudinal central axis;
Fig. 3 is another three-dimensional schematic drawing of the electrically adjustable steering column shown in Fig. 1, with the shield sleeve and the steering shaft removed to show the internal structure of the rocker arm more clearly;
Fig. 4 is a schematic drawing of a section of the electrically adjustable steering column shown in Fig. 3, taken along a vertical plane that includes a longitudinal central axis;
Fig. 5 is a schematic drawing of a section taken along line A-A shown in Fig. 2; and
Fig. 6 is a partial enlarged drawing of region B in Fig. 5.

### Detailed description of the invention

Preferred embodiments of the present invention are now described in detail with reference to the drawings. The description below is essentially merely exemplary, and not intended to restrict the present invention and its application or use.

The present invention provides an electrically adjustable steering column for a vehicle, and a vehicle having the electrically adjustable steering column. The electrically adjustable steering column can be adjusted to adapt to a driver's height or sitting posture, or even make it easier for the driver to enter and exit the vehicle, thereby realizing a so-called "easy entry/exit" function or "welcome" function. The vehicle may be any suitable motor vehicle having the electrically adjustable steering column provided in the present invention.

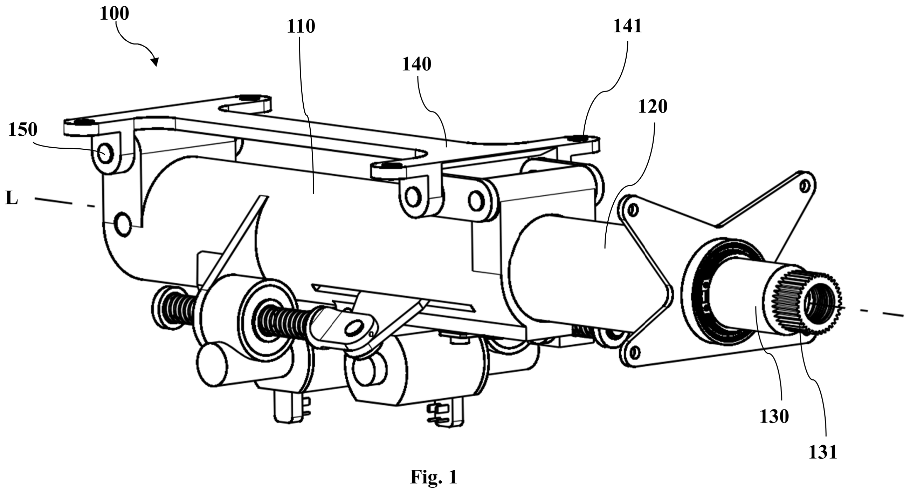

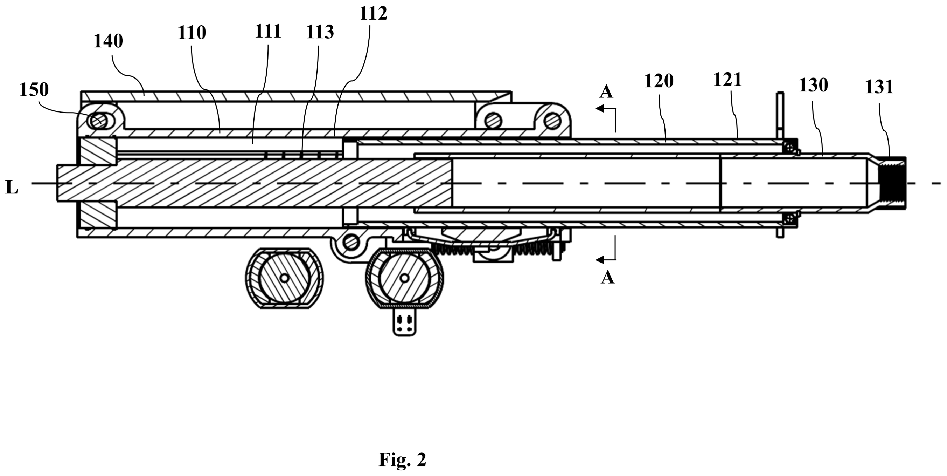

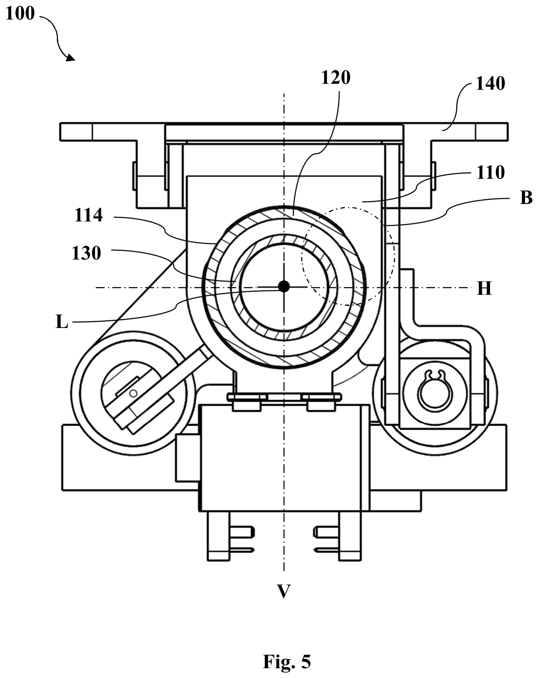

Fig. 1 is a three-dimensional schematic drawing of an electrically adjustable steering column 100 for a vehicle according to an exemplary embodiment of the present invention. Fig. 2 is a schematic drawing of a section of the electrically adjustable steering column 100 shown in Fig. 1, taken along a vertical plane V (Fig. 5) that includes a longitudinal central axis L. As shown in Figs. 1 and 2, the electrically adjustable steering column 100 mainly comprises a rocker arm 110, a shield sleeve 120 and a steering shaft 130. The electrically adjustable steering column 100 according to an exemplary embodiment of the present invention, and the main components thereof, will first be described in detail below with reference to Figs. 1 and 2.

As shown in Figs. 1 and 2, the rocker arm 110 is substantially in the form of a round tube. The rocker arm 110 may be made of any suitable rigid materials. For example, the rocker arm 110 may be made of a cast aluminium alloy. A rocker arm inner hole 111 is provided in the rocker arm 110. The rocker arm inner hole 111 is generally a substantially cylindrical hole. Specifically, the rocker arm 110 comprises a rocker arm inner surface 112 defining the rocker arm inner hole 111. The rocker arm inner hole 111 has a longitudinal central axis L.

As shown in Figs. 1 and 2, the rocker arm 110 may be connected by means of a mounting support 140 to a chassis or body of a vehicle (not shown). For example, a fastening means 141 may be provided on the mounting support 140; and the rocker arm 110 is connected to the mounting support 140, and connected to the chassis or body of the vehicle by means of the fastening means 141. Preferably, the rocker arm 110 may be pivotably connected to the mounting support 140. Specifically, a pivot shaft 150, which is substantially perpendicular to the longitudinal central axis L, is provided on the rocker arm 110 in a front end region thereof. When the rocker arm 110 is connected to the chassis or body of the vehicle by means of the support 140, the rocker arm 110 is able to pivot about the pivot shaft 150 in a substantially vertical direction, to adjust the height of the rocker arm 110 and thereby adjust the height of the electrically adjustable steering column 100.

It should be explained that the "front end" mentioned here and the "rear end" which will be mentioned below are with respect to the direction of travel of the vehicle when the electrically adjustable steering column 100 is fitted to the chassis or body of the vehicle. For example, in Figs. 1 and 2, the left side of the electrically adjustable steering column 100 is the "front end", and correspondingly, the right side of the electrically adjustable steering column 100 is the "rear end".

As shown in Figs. 1 and 2, the shield sleeve 120 is substantially in the form of a round tube. The shield sleeve 120 may likewise be made of any suitable rigid materials. For example, the shield sleeve 120 may be made of a drawn steel tube. Optionally, the shield sleeve 120 could also be made of a cast metal alloy of aluminium or steel. The shield sleeve 120 is configured to be slidably received in the rocker arm inner hole 111 of the rocker arm 110**.** Specifically, in an exemplary embodiment of the present invention, the shield sleeve 120 is able to slide inside the rocker arm inner hole 111 in an axial direction parallel to the longitudinal central axis L relative to the rocker arm 110, so as to retract or extend as required in the axial direction parallel to the longitudinal central axis L. The shield sleeve 120 comprises a shield sleeve outer surface 121. The shield sleeve outer surface 121 comprises a shield sleeve sliding surface in sliding contact with the rocker arm inner surface 112, and correspondingly, the rocker arm inner surface 112 comprises a rocker arm sliding surface in sliding contact with the shield sleeve outer surface 121. That is, the rocker arm sliding surface and the shield sleeve sliding surface are in sliding contact, and the shield sleeve sliding surface is able to slide back and forth on the rocker arm sliding surface in the axial direction parallel to the longitudinal central axis L.

It should be explained that the rocker arm inner surface 112 may be in sliding contact with the shield sleeve outer surface 121 in the entire circumferential direction (i.e. the direction around the longitudinal central axis L), to increase the stability of the shield sleeve 120 when sliding in the rocker arm 110, and avoid wobbling. The rocker arm inner surface 112 could also be in sliding contact with the shield sleeve outer surface 121 in just a portion of the circumferential direction, to reduce the area of contact and reduce wear. In addition, the range of extension, in the axial direction parallel to the longitudinal central axis L, of the rocker arm sliding surface located on the rocker arm inner surface 112 and the shield sleeve sliding surface located on the shield sleeve outer surface 121 may be determined according to the desired distance of extension/retraction of the electrically adjustable steering column 100. For example, in the axial direction parallel to the longitudinal central axis L, the rocker arm sliding surface may extend the entire axial length of the rocker arm inner surface 112 from the rear end of the rocker arm 110 towards the front end of the rocker arm 110, so as to have as long a length as possible for guiding the shield sleeve 120 inside the rocker arm 110. Optionally, to reduce space and/or costs, the rocker arm sliding surface could also extend over only a portion (e.g. about 2/3) of the entire axial length of the rocker arm inner surface 112 extending from the rear end of the rocker arm 110 towards the front end of the rocker arm 110.

As shown in Figs. 1 and 2, the steering shaft 130 is rotatably received in the shield sleeve 120. The steering shaft 130 projects from one end (specifically, the rear end) of the shield sleeve 120. An end of the steering shaft 130 may be provided with an assembly feature part 131 configured to mate with a steering wheel (not shown) to be fitted to the steering shaft 130, for the purpose of fitting the steering wheel that can be operated by the driver of the vehicle to control the vehicle.

According to the concept of the present invention, in order to reduce wear between the shield sleeve sliding surface on the shield sleeve outer surface 121 and the rocker arm sliding surface on the rocker arm inner surface 112, and in particular reduce the risk that wear between the shield sleeve sliding surface and the rocker arm sliding surface will be accelerated by wear particles generated by wear of the shield sleeve sliding surface and the rocker arm sliding surface, the rocker arm sliding surface (located on the rocker arm inner surface 112) may comprise a recess 113, as shown in Fig. 2. Of course, in other embodiments of the present invention which are not shown, a recess 113 could also be provided on the shield sleeve sliding surface (located on the shield sleeve outer surface 121); or recesses 113 could be provided on both the rocker arm sliding surface located on the rocker arm inner surface 112 and the shield sleeve sliding surface located on the shield sleeve outer surface 121. Firstly, the recess 113 may be configured to store a lubricating substance; as the shield sleeve 120 slides relative to the rocker arm 110 in the axial direction parallel to the longitudinal central axis L, the lubricating substance stored in the recess 113 can be distributed between the shield sleeve sliding surface and the rocker arm sliding surface, to reduce wear therebetween. Secondly, the recess 113 may also be configured to receive wear particles generated by wear between the shield sleeve sliding surface and the rocker arm sliding surface as the shield sleeve 120 slides relative to the rocker arm 110 in the axial direction parallel to the longitudinal central axis L, to prevent these wear particles from accumulating on the shield sleeve sliding surface and the rocker arm sliding surface and accelerating wear between the shield sleeve sliding surface and the rocker arm sliding surface.

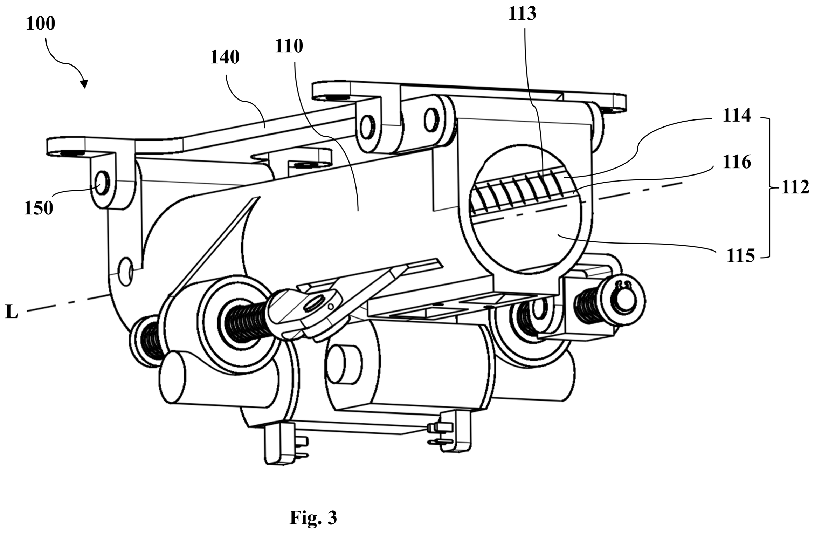

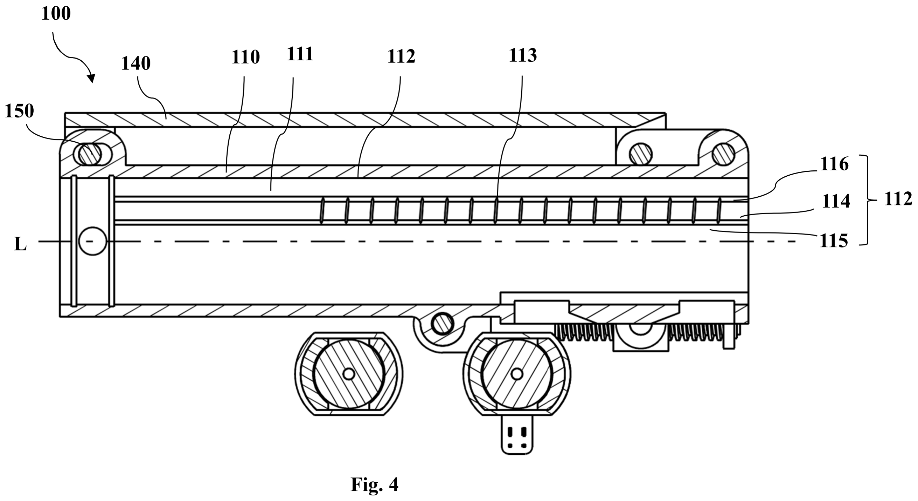

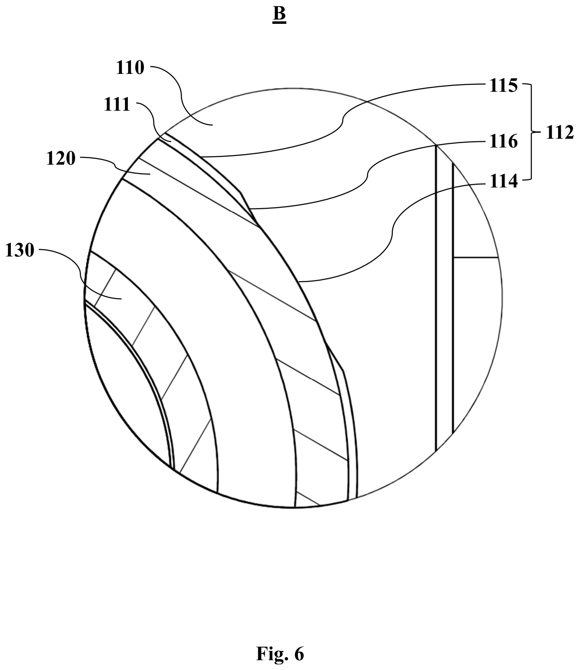

Fig. 3 is another three-dimensional schematic drawing of the electrically adjustable steering column 100 shown in Fig. 1, with the shield sleeve 120 and the steering shaft 130 removed to show the internal structure of the rocker arm 110 more clearly. Fig. 4 is a schematic drawing of a section of the electrically adjustable steering column 100 shown in Fig. 3, taken along the vertical plane V that includes the longitudinal central axis L. Fig. 5 is a schematic drawing of a section taken along line A-A shown in Fig. 2. Fig. 6 is a partial enlarged drawing of region B in Fig. 5. The present invention will be described in further detail below with reference to Figs. 3 - 6, taking as an example the case where the recess 113 is provided on the rocker arm sliding surface (located on the rocker arm inner surface 112) of the rocker arm 110 of the electrically adjustable steering column 100.

As shown in Figs. 3 - 6, the rocker arm inner surface 112 comprises a first inner surface 114 and a second inner surface 115 which are at different radial distances from the longitudinal central axis L, wherein the first inner surface 114 protrudes radially inwards relative to the second inner surface 115. That is, the radial distance from the first inner surface 114 to the longitudinal central axis L is less than the radial distance from the second inner surface 115 to the longitudinal central axis L. For example, the difference between the radial distance between the first inner surface 114 and the longitudinal central axis L and the radial distance between the second inner surface 115 and the longitudinal central axis L is between 0.5 mm and 3 mm. When the shield sleeve 120 is inserted in the rocker arm inner hole 111, the first inner surface 114 is in sliding contact with the shield sleeve outer surface 121. It will be understood that, depending on the desired distance of extension/retraction of the electrically adjustable steering column 100, the entirety or a portion of the first inner surface 114 in the axial direction parallel to the longitudinal central axis L forms the rocker arm sliding surface. The second inner surface 115 is spaced apart from the shield sleeve outer surface 121. That is to say, only the first inner surface 114 is in sliding contact with the shield sleeve outer surface 121, and the second inner surface 115 is spaced apart from the shield sleeve outer surface 121. Viewed circumferentially, only a portion of the rocker arm inner surface 112 and only a portion of the shield sleeve outer surface 121 are used as the rocker arm sliding surface and the shield sleeve sliding surface respectively. Thus, the area of sliding contact can be reduced, to reduce wear. The circumferential width of the first inner surface 114 (i.e. the portion of the rocker arm inner surface 112 used as the rocker arm sliding surface) may for example be 5 mm - 30 mm. In addition, the rocker arm inner surface 112 further comprises a first connecting surface 116 connecting the first inner surface 114 and the second inner surface 115. Preferably, the first connecting surface 116 is an inclined transitional surface, wherein an angle of inclination (i.e. an angle between the second inner surface 115 and the first connecting surface 116) may for example be 5° - 30°.

As shown in Figs. 3 and 4, the recess 113 is arranged on the first inner surface 114. The dimensions and shape, etc. of the recess 113 may be set according to actual needs (e.g. the expected service life of the electrically adjustable steering column 100, the material of the shield sleeve 120, the material of the rocker arm 110, etc.). For example, the depth of the recess 113 may be 0.1 mm - 2 mm, and the width of the recess may be 0.5 mm - 3 mm, to make it easier to store the lubricating substance and receive wear particles. As another example, the recess 113 may have an elongated shape. Preferably, multiple recesses 113 may be provided; and the multiple recesses 113 may be spaced apart in the axial direction parallel to the longitudinal central axis L, to at least cover the rocker arm sliding surface in the axial direction. It will be understood that, depending on the desired distance of extension/retraction of the electrically adjustable steering column 100, the multiple recesses 113 may be arranged over the entire axial extent of the first inner surface 114, or over only a portion of the axial extent of the first inner surface 114. For example, the multiple recesses 113 may be arranged over about 2/3 of the entire axial length of the first inner surface 114 extending from the rear end of the rocker arm 110 towards the front end of the rocker arm 110. It is also possible for recesses 113 to be provided in two or more regions of the first inner surface 114, each region extending in the axial direction parallel to the longitudinal central axis L and comprising multiple recesses 113, and the regions being separated from each other. For example, one region may be located near the front end of the rocker arm 110, another region may be located near the rear end of the rocker arm 110, and the axial length of each region accounts for about 1/3 of the entire axial length of the first inner surface 114. Further preferably, the multiple recesses 113 may be evenly spaced apart in the axial direction, so as to deliver the lubricating substance stored in the recesses 113 to the shield sleeve sliding surface and the rocker arm sliding surface evenly, to prevent excessive local wear to the shield sleeve sliding surface and the rocker arm sliding surface. The distance by which each pair of adjacent recesses 113 are spaced apart may likewise be set according to actual needs (e.g. the expected service life of the electrically adjustable steering column 100, the material of the shield sleeve 120, the material of the rocker arm 110, etc.).

Preferably, as shown in Figs. 5 and 6, the rocker arm inner surface 112 may comprise multiple rocker arm sliding surfaces, and correspondingly, the shield sleeve outer surface 121 may comprise multiple shield sleeve sliding surfaces, to increase the stability of the shield sleeve 120 when sliding in the rocker arm inner hole 111 of the rocker arm 110. Specifically, in an exemplary embodiment of the present invention, the rocker arm inner surface 112 may comprise multiple first inner surfaces 114 protruding radially inwards by the same distance relative to the second inner surface 115. That is, within a vertical plane perpendicular to the longitudinal central axis L of the rocker arm inner hole 111, as shown in Fig. 5, the radial distance from each first inner surface 114 to the longitudinal central axis L is the same. This allows the shield sleeve 120 to be inserted into the rocker arm inner hole 111 in a centred way.

More specifically, in an exemplary embodiment of the present invention, as shown in Figs. 5 and 6, the rocker arm inner surface 112 comprises two rocker arm sliding surfaces, i.e. the rocker arm inner surface 112 comprises two first inner surfaces 114. Preferably, the two first inner surfaces 114 are located in the upper half of the rocker arm inner surface 112. That is, the two first inner surfaces 114 are located above a horizontal plane H that includes the longitudinal central axis L. Depending on actual needs, the first inner surface 114 may be located at any suitable position in the upper half of the rocker arm inner surface 112. For example, in the sectional drawing shown in Fig. 5, the first inner surface 114 is located on an arc section between angles of about 15° and about 45° with respect to a horizontal direction. Having the first inner surface 114 arranged in the upper half makes it easier for the lubricating substance stored in the recesses 113 to act on the rocker arm sliding surface and the shield sleeve sliding surface under the action of gravity, so as to lubricate these two sliding surfaces. Optionally, the two first inner surfaces 114 could also be located in the lower half of the rocker arm inner surface 112. In addition, the two first inner surfaces 114 are symmetric with respect to the vertical plane V that includes the longitudinal central axis L, to avoid eccentricity of the shield sleeve 120 in the rocker arm inner hole 111, so that the shield sleeve 120 is able to slide in the rocker arm inner hole 111 in a centred way.

It should be explained that in Figs. 3 - 6, only the rocker arm inner surface 112 is shown as comprising the first inner surface 114 and the second inner surface 115 which are at different radial distances from the longitudinal central axis L, while the shield sleeve outer surface 121 is shown as a continuous, smooth circumferential surface, i.e. all positions on the shield sleeve outer surface 121 are at the same distance from the longitudinal central axis L; nevertheless, in embodiments of the present invention which are not shown, alternatively or additionally, the shield sleeve outer surface 121 may comprise a first outer surface and a second outer surface which are at different radial distances from the longitudinal central axis L, and a second connecting surface connecting the first outer surface and the second outer surface, wherein the first outer surface protrudes radially outwards relative to the second outer surface, the second connecting surface may be an inclined transitional surface, and at least a portion of the first outer surface forms the shield sleeve sliding surface. Preferably, the shield sleeve outer surface 121 may comprise multiple such first outer surfaces, which protrude radially outwards by the same distance relative to the second outer surface. For example, the shield sleeve outer surface 121 may comprise two first outer surfaces, which may be located in the lower half of the shield sleeve outer surface, to make it easier for a lubricating substance stored in recesses provided on the first outer surfaces to act on the rocker arm sliding surface and the shield sleeve sliding surface under the action of gravity. Optionally, depending on needs, the two first outer surfaces could also be located in the upper half of the shield sleeve outer surface. Preferably, the two first outer surfaces are symmetric with respect to the vertical plane V that includes the longitudinal central axis L of the rocker arm inner hole 111.

In summary, in the technical solution of the present invention, a recess 113 is provided in at least one of the rocker arm sliding surface located on the rocker arm inner surface 112 and the shield sleeve sliding surface located on the shield sleeve outer surface 121. Firstly, the recess 113 may be configured to store a lubricating substance; as the shield sleeve 120 slides relative to the rocker arm 110 in the axial direction parallel to the longitudinal central axis L, the lubricating substance stored in the recess 113 can be distributed between the shield sleeve sliding surface and the rocker arm sliding surface, to reduce wear therebetween. Secondly, the recess 113 may also be configured to receive wear particles generated by wear between the shield sleeve sliding surface and the rocker arm sliding surface as the shield sleeve 120 slides relative to the rocker arm 110 in the axial direction parallel to the longitudinal central axis L, to prevent these wear particles from accumulating on the shield sleeve sliding surface and the rocker arm sliding surface and accelerating wear between the shield sleeve sliding surface and the rocker arm sliding surface. Thus, in the technical solution of the present invention, wear between the rocker arm sliding surface and the shield sleeve sliding surface can be reduced by modifying the surface profile of the rocker arm sliding surface located on the rocker arm inner surface 112 and/or the shield sleeve sliding surface located on the shield sleeve outer surface 121, without any need to add other components (such as lubricating grease pockets); in particular, wear particles that might be present can be prevented from accumulating on the shield sleeve sliding surface and the rocker arm sliding surface and accelerating wear between the shield sleeve sliding surface and the rocker arm sliding surface. Thus, in the technical solution of the present invention, degradation in the performance of the electrically adjustable steering column 100 can be prevented or delayed without adding other components, thus extending the service life of the electrically adjustable steering column 100.

It should be understood that various embodiments can be further designed by combining or modifying different embodiments and various technical features in different ways.

Preferred embodiments of the present invention have been described above in conjunction with specific embodiments. It will be understood that the description above is merely exemplary but not limiting, and those skilled in the art will be able to think of various variants and modifications with reference to the description above, without departing from the scope of the present invention. These variants and modifications are likewise included in the scope of protection of the present application.

## Claims

1. An electrically adjustable steering column (100) for a vehicle, **characterized in that** the electrically adjustable steering column (100) comprises:
a rocker arm (110) comprising a rocker arm inner surface (112) which defines a rocker arm inner hole (111);
a shield sleeve (120) configured to be slidably received in the rocker arm inner hole (111), the shield sleeve (120) comprising a shield sleeve outer surface (121); and
a steering shaft rotatably received in the shield sleeve (120) and projecting from one end of the shield sleeve (120);
wherein the rocker arm inner surface (112) comprises a rocker arm sliding surface, the shield sleeve outer surface (121) comprises a shield sleeve sliding surface, the rocker arm sliding surface is in sliding contact with the shield sleeve sliding surface, and at least one of the rocker arm sliding surface and the shield sleeve sliding surface comprises a recess (113).

2. The electrically adjustable steering column according to Claim 1, **characterized in that** the rocker arm inner surface (112) comprises a first inner surface (114), a second inner surface (115) and a first connecting surface (116), the first inner surface (114) protruding radially inwards relative to the second inner surface (115), the first connecting surface (116) connecting the first inner surface (114) and the second inner surface (115), and at least a portion of the first inner surface (114) forming the rocker arm sliding surface, and/or
the shield sleeve outer surface comprises a first outer surface, a second outer surface and a second connecting surface, the first outer surface protruding radially outwards relative to the second outer surface, the second connecting surface connecting the first outer surface and the second outer surface, and at least a portion of the first outer surface forming the shield sleeve sliding surface.

3. The electrically adjustable steering column according to Claim 2, **characterized in that** there are multiple said recesses (113), spaced apart in an axial direction parallel to a longitudinal central axis (L)of the rocker arm inner hole (111).

4. The electrically adjustable steering column according to Claim 3, **characterized in that** the multiple recesses (113) are evenly spaced apart.

5. The electrically adjustable steering column according to Claim 2, **characterized in that** the rocker arm inner surface (112) comprises multiple said first inner surfaces (114), which protrude radially inwards by the same distance relative to the second inner surface (115), and/or
the shield sleeve outer surface comprises multiple said first outer surfaces, which protrude radially outwards by the same distance relative to the second outer surface.

6. The electrically adjustable steering column according to Claim 5, **characterized in that** the rocker arm inner surface (112) comprises two said first inner surfaces (114) located in an upper half of the rocker arm inner surface (112), and/or the shield sleeve outer surface comprises two said first outer surfaces located in an upper half of the shield sleeve outer surface.

7. The electrically adjustable steering column according to Claim 6, **characterized in that** the two first inner surfaces (114) are symmetric with respect to a vertical plane that includes a longitudinal central axis (L) of the rocker arm inner hole (111), and/or the two first outer surfaces are symmetric with respect to a vertical plane that includes a longitudinal central axis (L) of the rocker arm inner hole (111).

8. The electrically adjustable steering column according to Claim 2, **characterized in that** the first connecting surface (116) and/or the second connecting surface is an inclined transitional surface.

9. The electrically adjustable steering column according to any one of Claims 2 - 4, **characterized in that** the recesses (113) are provided in two or more regions of the first inner surface (114), each of the regions extending in the axial direction parallel to the longitudinal central axis (L) of the rocker arm inner hole (111), and the regions being separated from each other.

10. A vehicle, **characterized in that** the vehicle comprises the electrically adjustable steering column (100) according to any one of Claims 1 - 9.
